# FASCICULE DE BREVET EUROPEEN

(11) **EP 1 589 861 B1**
(45) Date de publication et mention de la délivrance du brevet: **10.09.2008**
(21) Numéro de dépôt: 03809364.7
(22) Date de dépôt: 17.10.2003
(51) Int. Cl.: A47J 42/04, A47J 42/08

(54) **BROYEUR MANUEL REGLABLE**
EINSTELLBARES MANUELLES MAHLGERÄT
ADJUSTABLE MANUAL GRINDER

(30) Priorité: 22.10.2002 LU 90979
(43) Date de publication de la demande: 02.11.2005
(73) Titulaire: Franchet, Alain, 2514 Luxembourg (LU)
(72) Inventeur: Franchet, Alain, 2514 Luxembourg (LU)
(86) Numéro de dépôt international: PCT/FR2003/003073
(87) Numéro de publication internationale: WO 2004/037057

(56) Documents cités:
- DE-C- 331 539
- LU-A- 90 316
- US-A- 4 960 246
- US-A1- 2002 117 566

## Description

La présente invention concerne un broyeur manuel pour produits alimentaires et notamment d'épices en grains ou en graines telles que du poivre ou encore du sel ;

Plus précisément, l'invention s'applique aux moulins qui équipent les conditionnements dits jetables après consommation du produit.

Les broyeurs traditionnels qui sont généralement réalisés en matière plastique comprennent, d'une part, un réservoir et, d'autre part, un stator et un rotor montés sur le réservoir et délimitant entre eux une mâchoire de broyage des grains. Un tel broyeur est décrit dans le document LU 90316A.

Cependant, ces broyeurs n'offrent aucune possibilité de régler la granulométrie du produit pulvérulent obtenu.

En effet, la position relative du stator et du rotor est déterminée une fois pour toutes à la fabrication ou à l'assemblage et l'écartement de la mâchoire ne peut donc être ajusté lors de la distribution pour affiner la forme finale du produit issu du broyage.

La présente invention a pour but de résoudre ces problèmes techniques de manière satisfaisante et efficace ;

Ce but est atteint, selon l'invention, au moyen d'un broyeur manuel du type précédent caractérisé en ce que ledit rotor comprend un corps cylindrique extérieur pourvu de lumières et une douille intérieure coaxiale logée dans ledit corps et portant des ergots latéraux de liaison verrouillés de manière amovible dans lesdites lumières de façon à permettre le réglage de la position axiale de ladite douille relativement au stator.

Selon une caractéristique avantageuse, ladite douille intérieure ou ledit corps porte des éléments flexibles permettant de créer un jeu axial entre la douille et ledit corps en vue d'assurer la libération des ergots lors du réglage du rotor.

De préférence, ledit corps ou ladite douille du rotor comporte une collerette intérieure destinée à recevoir l'appui des éléments flexibles.

Selon une autre caractéristique, ladite douille comporte une couronne emmanchée dans ledit corps et un noyau tronconique raccordé à ladite couronne par des entretoises radiales et pourvu d'une paroi dentelée disposée en regard de la paroi interne à profil complémentaire du stator.

Selon encore une autre caractéristique, ladite douille est pourvue d'une bague externe prolongeant axialement ledit corps.

Selon un variant spécifique, ledit stator comporte une bride périphérique prenant appui sur le rebord du réservoir et un manchon inséré dans ledit réservoir.

De préférence, lesdites lumières ont un profil au moins partiellement hélicoïdal.

Le réservoir est réalisé avec un col en matière rigide (plastique ou verre) muni d'un jonc annulaire sur lequel est encliqueté ledit corps avec liberté de rotation.

Avantageusement, ladite douille est pourvue d'éléments de calage latéral coopérant avec des éléments complémentaires ménagés intérieurement sur ledit corps.

Le broyeur de l'invention permet d'obtenir une poudre de granulométrie variable en fonction des souhaits du consommateur.

Ce broyeur offre également une surface de support pour le conditionnement qui peut ainsi parfaitement être entreposé avec le réservoir au-dessus. Cette disposition autorise des modes de réalisation où le réservoir présente des formes diverses et variées en utilisant éventuellement des matières plastiques souples dans la partie située au-delà du col.

Le réglage de l'écartement de la mâchoire s'effectue de manière simple et aisée en adoptant des positions prédéterminées. Le passage d'une position à l'autre ne nécessite, en outre, que très peu d'effort du fait de la présence des éléments flexibles.

L'invention sera mieux comprise à la lecture de la description qui va suivre en référence aux dessins annexés sur lesquels :

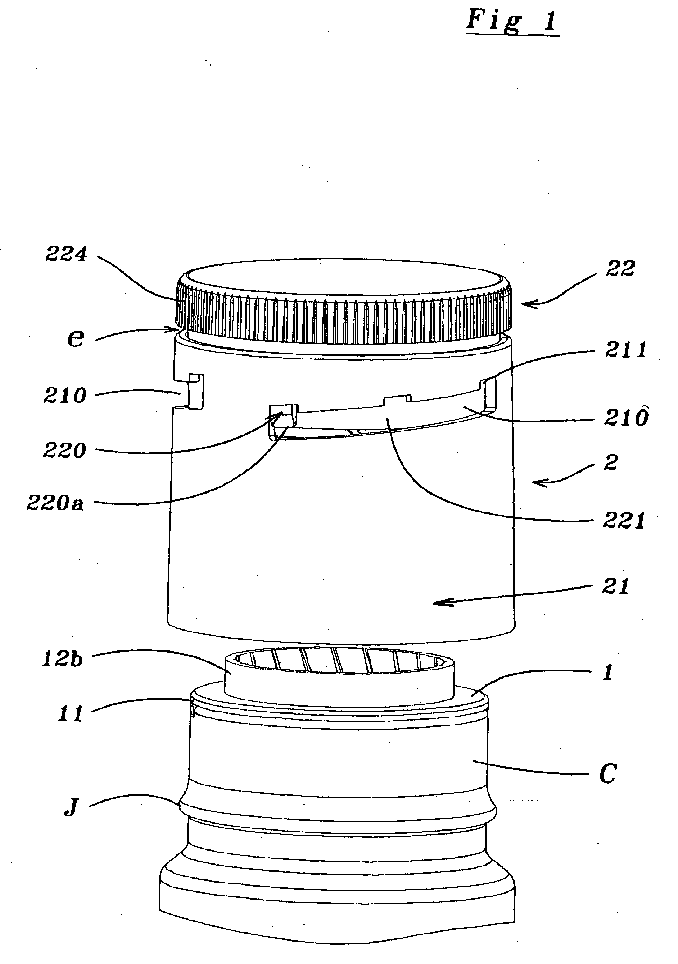

La figure 1 représente une vue latérale d'un mode de réalisation du broyeur de l'invention avant montage sur le col du réservoir pré-équipé du stator.

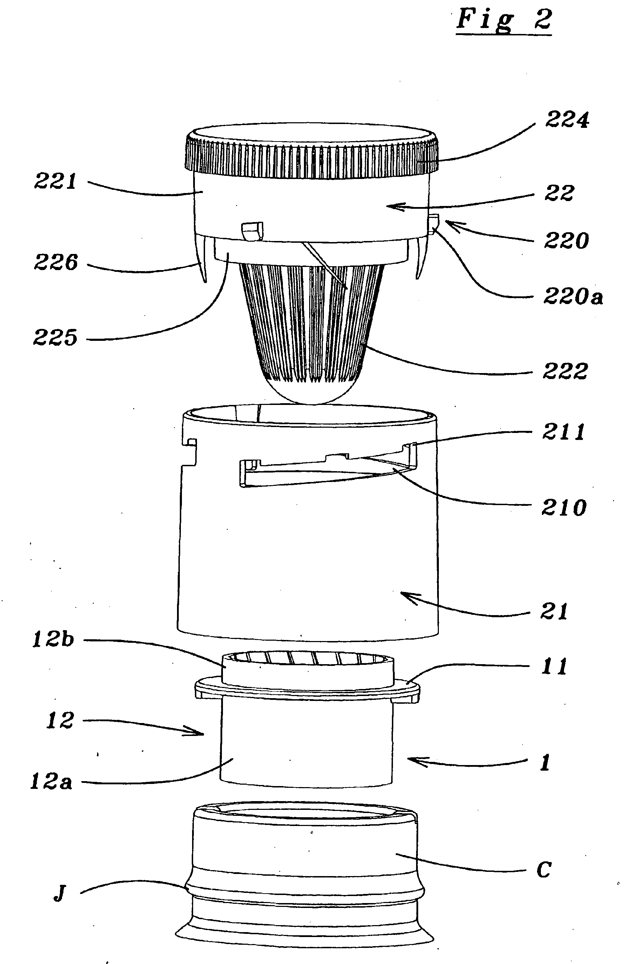

La figure 2 représente une vue éclatée des différentes pièces constitutives du broyeur de la figure 1.
La figure 3 représente une vue latérale en coupe du broyeur des figures 1 et 2.

Le broyeur de l'invention tel qu'il est représenté sur les figures, comprend, d'une part, un réservoir dont seul le col C est ici représenté, et, d'autre part, un stator 1 et un rotor 2 montés sur ledit col. Le stator 1 est fixé sur le réservoir et comporte une bride périphérique 11 prenant appui sur son rebord ainsi qu'un manchon 12 inséré par sa partie interne 12a avec serrage radial dans le col C.

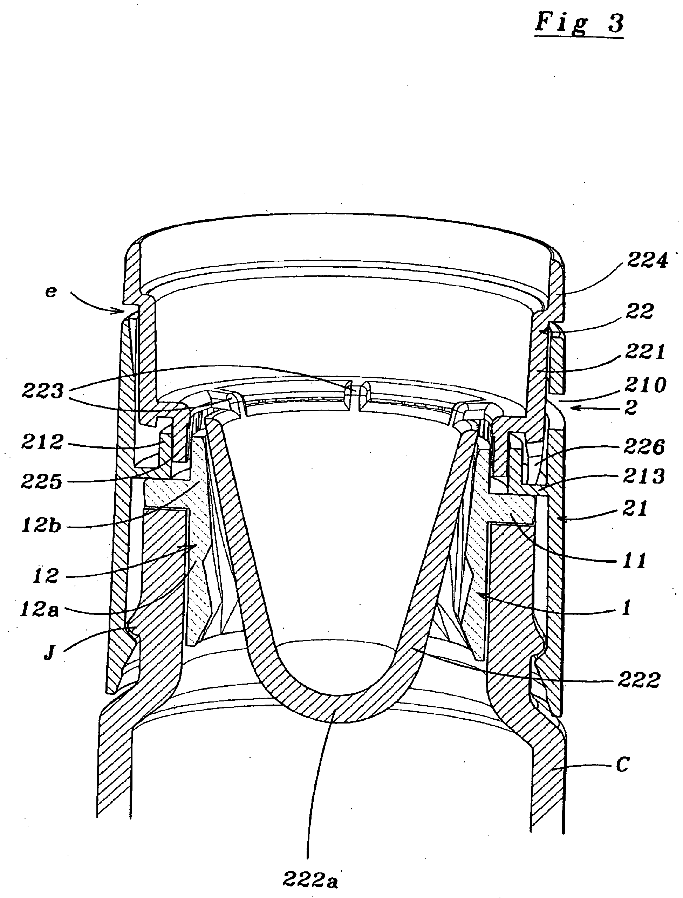

Le stator 1 et le rotor 2 délimitent entre eux une mâchoire (apparente sur la figure 3) qui est alimentée en produit par gravité à partir du réservoir.

Pour des raisons pratiques, le broyeur est représenté sur les figures en position supérieure, mais il est clair que le mode de broyage et de distribution du produit s'effectue avec le réservoir au-dessus.

Le rotor 2 comprend un corps cylindrique extérieur 21 encliqueté sur un jonc annulaire J du col C en conservant sa liberté de rotation. Ce corps 21 est pourvu sur sa paroi latérale, de lumières 210. Le rotor 2 comprend aussi une douille intérieure 22 coaxiale. La douille 22 est logée dans le corps 21 et porte des ergots latéraux 220 assurant la liaison avec le corps 21.

La douille 22 comporte une couronne 221 qui est emmanchée dans le corps 21 et qui se prolonge, à l'intérieur du stator 1 par un noyau tronconique 222. Le noyau 222 est raccordé à la couronne 221 par des entretoises radiales 223 délimitantes entre elles, sur le pourtour du noyau 222, des passages pour le produit pulvérulent résultant du broyage. Le noyau 222 est pourvu d'une paroi latérale dentelée qui est disposée en regard de la paroi interne à profil complémentaire du stator 1. Comme représenté sur la figure 3, la mâchoire délimitée par les parois respectives du noyau 222 et du stator 1, a un profil évasé à la manière d'un entonnoir pour faciliter l'introduction des grains dans la zone de broyage. L'alimentation de la mâchoire est, en outre, améliorée par la calotte sphérique 222a ménagée à l'extrémité du noyau 222 et sur laquelle glisse les grains.

La douille 22 est, en outre, pourvue d'une bague externe 224 prolongeant axialement et de façon affleurante le corps 21. La bague 224 forme à la fois une base de support et un conduit de guidage pour la distribution du produit broyé. Le cas échéant, la bague 224 est munie de cannelures externes facilitant la prise du corps 21 du rotor 2 lors de la manoeuvre du broyeur.

La douille 22 porte également des éléments de calage latéral, ici sous forme d'une bande coaxiale 225 coopérants par contact avec des éléments complémentaires tels qu'une paroi cylindrique 212 réalisée à l'intérieur du corps 21. La bande 225 assure aussi l'étanchéité de la zone de distribution en interdisant aux fines particules de s'introduire, à l'extérieur de la mâchoire, entre le rotor 2 et le stator 1.

À cet effet, lors de la rotation du rotor 2, la bande 225 glisse au contact de la paroi de la partie externe 12b du manchon 12 du stator 1.

La partie externe 12b du manchon 12 délimite la zone inférieure de la mâchoire en faisant saillie entre la bande 225 de la douille 22 et le noyau 222.

Les lumières 210 ont un profil au moins partiellement hélicoïdal permettant le déplacement axial de la douille 22 dans le corps 21 et l'ajustement du noyau 222 relativement au stator 1.

Les ergots 220 de la douille 22 sont engagés dans les lumières 210 où ils sont susceptibles d'êtres verrouillés de manière amovible par retenue dans des créneaux 211. La longueur des lumières 210 ainsi que le nombre des créneaux 211 est prédéterminé en fonction des différents écartements de mâchoire et donc des plages de granulométrie recherchées.

Le montage de la douille 22 dans le corps 21 s'accompagne d'une légère déformation élastique de la zone portant les ergots 220 et est facilité par le guidage d'une face chanfreinée sous-jacente 220a...

La douille 22 porte aussi des éléments flexibles 226 permettant de créer un jeu axial entre elle et ledit corps en vue d'assurer la libération des ergots 220 lors du réglage du rotor 2.

Selon une variante non représentée, c'est le corps 21 qui porte les éléments flexibles à la place de la douille 22.

Le corps 21 (ou selon la variante précitée la douille 22) comporte une collerette intérieure 213 destinée à recevoir l'appui des éléments flexibles 226.

Ces éléments flexibles sont réalisés ici sous forme de lamelles inclinées dont au moins l'extrémité est susceptible de se déformer élastiquement, par exemple par flexion, lors de l'enfoncement de la douille 22 dans le corps 21. Dans cette perspective, un espace libre intercalaire est ménagé entre la bague 224 et le bord du corps 21.

## Revendications

1. Broyeur manuel pour produits alimentaires en grains du type comprenant, d'une part, un réservoir et, d'autre part, un stator (1) et un rotor (2) montés sur le réservoir et délimitant entre eux une mâchoire alimentée par ledit réservoir, **caractérisé en ce que** ledit rotor (2) comprend un corps cylindrique extérieur (21) pourvu de lumières (210) et une douille intérieure coaxiale (22) logée dans ledit corps (21) et portant des ergots latéraux (220) de liaison verrouillés de manière amovible dans lesdites lumières de façon à permettre le réglage de la position axiale de ladite douille (22) relativement au stator (1).

2. Broyeur selon la revendication 1 **caractérisé en ce que** ladite douille (22) ou ledit corps (21) porte des éléments flexibles (226) permettant de créer un jeu axial entre la douille (22) et ledit corps (21) en vue d'assurer la libération des ergots (220) lors du réglage du rotor (2).

3. Broyeur selon la revendication 2 **caractérisé en ce que** ledit corps (21) ou ladite douille (22) du rotor (2) comporte une collerette intérieure (213) destinée à recevoir l'appui des éléments flexibles (226).

4. Broyeur selon l'une des revendications précédentes **caractérisé en ce que** ladite douille (22) comporte une couronne (221) emmanchée dans ledit corps (21) et un noyau tronconique (222) raccordé à ladite couronne (221) par des entretoises radiales (223) et pourvu d'une paroi dentelée disposée en regard de la paroi interne à profil complémentaire du stator (1).

5. Broyeur selon l'une des revendications précédentes **caractérisé en ce que** ladite douille (22) est pourvue d'une bague externe (224) prolongeant axialement ledit corps (21).

6. Broyeur selon l'une des revendications précédentes **caractérisé en ce que** ledit stator (1) comporte une bride périphérique (11) prenant appui sur le rebord du réservoir et un manchon (12) inséré dans le col dudit réservoir.

7. Broyeur selon l'une des revendications précédentes **caractérisé en ce que** lesdites lumières (210) ont un profil au moins partiellement hélicoïdal.

8. Broyeur selon l'une des revendications précédentes **caractérisé en ce que** ledit corps (21) est encliqueté avec liberté de rotation sur le col du réservoir.

9. Broyeur selon l'une des revendications précédentes **caractérisé en ce que** ladite douille (22) est pourvue d'éléments de calage latéral (225) coopérant avec des éléments complémentaires (212) ménagés intérieurement sur ledit corps (21).

10. Broyeur selon l'une des revendications précédentes **caractérise en ce que** ladite mâchoire a un profil évasé.

11. Broyeur selon la revendication 4 **caractérisé en ce que** l'extrémité du noyau tronconique (222) présente une calotte sphérique (222a).

12. Broyeur selon l'une des revendications précédentes **caractérisé en ce que** ladite douille (22) porte des éléments de calage latéral coopérant, par contact, avec une paroi cylindrique (212) réalisée à l'intérieur du corps (21).

13. Broyeur selon l'une des revendications précédentes **caractérisé en ce que** lesdits ergots de liaison (220) sont retenus de manière amovible dans des créneaux (211).

## Claims

1. A manual grinder for food grains products of the kind comprising, on the one hand, a can and, on the other hand, a stator (1) and a rotor (2) secured to the can and delimitating in between a jaw fed by said can, **characterised in that** said rotor (2) comprises an outer cylindrical body (21) provided with holes (210) and an inner coaxial bush (22) housed in said body (21) and supporting connecting side pins (220) removably locked in said holes in order to allow the adjustement of the axial position of said bush (22) relatively to said stator (1).

2. A manual grinder according to claim 1 **characterised in that** said bush (22) or said body (1) bears flexible members (226) allowing an axial clearance between the bush (22) and said body (21) in order to release the tabs (220) while adjusting the rotor (2).

3. A manual grinder according to claim 2 **characterised in that** said body (21) or said bush (2) of rotor (2) comprises an inner collar (213) subjected to the bearing of the flexible members (226).

4. A manual grinder according to any one of the preceding claims **characterised in that** said bush (22) comprises a crown (221) tight-fitted into said body (21) and a frustroconical core (222) connected to said crown (221) by means of radial spacers (223) and provided with a serrated wall located in front of the complementary shaped inner wall of stator (1).

5. A manual grinder according to any one of the preceding claims **characterised in that** said bush (22) is provided with an outer ring (224) axially extending said body (21).

6. A manual grinder according to any one of the preceding claims **characterised in that** said stator (1) comprises a peripheral flange (11) bearing on the can edge and a sleeve (12) tight-fitted into the can neck.

7. A manual grinder according to any one of the preceding claims **characterised in that** said holes (210) have a at least partially helical profile.

8. A manual grinder according to any one of the preceding claims **characterised in that** said body (21) is snapped-on with a free rotation on the can neck.

9. A manual grinder according to any one of the preceding claims **characterised in that** said bush (22) is provided with side blocking members (225) cooperating with complementary means realised innerly on said body.

10. A manual grinder according to any one of the preceding claims **characterised in that** said jaw has a truncated shape.

11. A manual grinder according to claim 4 **characterised in that the end of the frustroconical core (222)** has a spherical dome.

12. A manual grinder according to any one of the preceding claims **characterised in that** said bush (22) holds lateral setting members which cooperate by contact with a cylindrical wall (212) housed within said body (21).

13. A manual grinder according to any one of the preceding claims **characterised in that** said side pins (220) are retained in a movable manner in cut-outs (211).

## Patentansprüche

1. Handmühle für komförmige Nahrungsmittel der Art, die einerseits einen Behälter und andererseits einen Stator (1) und einen Rotor (2) umfasst, die auf den Behälter aufgebracht sind und zwischen sich eine Backe umgrenzen, die vom genannten Behälter beschickt wird, **dadurch gekennzeichnet, dass** der genannte Rotor (2) einen mit Öffnungen (210) versehenen äußeren zylindrischen Körper (21) umfasst, der eine koaxiale Innenhülse (22) aufweist, die in dem genannten Körper (21) gelagert ist und seitliche Verbindungszapfen (220) trägt, die lösbar in die genannten Öffnungen greifen, so dass die Einstellung der Axialposition der genannten Hülse (22) in Bezug auf den Stator (1) ermöglicht wird.

2. Mühle gemäß Anspruch 1, **gekennzeichnet dadurch, dass** die genannte Hülse (22) oder der genannte Körper (21) biegsame Elemente (226) trägt, die geeignet sind, ein Axialspiel zwischen der Hülse (22) und dem genannten Körper (21) herzustellen, um bei der Einstellung des Rotors (2) ein Lösen der Zapfen (220) zu ermöglichen.

3. Mühle gemäß Anspruch 2, **gekennzeichnet dadurch, dass** der genannte Körper (21) oder die genannte Hülse (22) des Rotors (2) einen Innenbund (213) aufweist, der zur Aufnahme des Drucks der biegsamen Elemente (226) bestimmt ist.

4. Mühle gemäß einem der vorhergehenden Ansprüche, **gekennzeichnet dadurch, dass** die genannte Hülse (22) mit einem in den genannten Körper (21) eingezogenen Kranz (221) sowie einem kegelstumpfförmigen Kern (222) versehen ist, der über Radialstege (223) mit dem genannten Kranz (221) verbunden ist und eine gezackte Wand aufweist, die der komplementär profilierten Innenwand des Stators (1) gegenüber angeordnet ist.

5. Mühle gemäß einem der vorhergehenden Ansprüche, **gekennzeichnet dadurch, dass** die genannte Hülse (22) einen Außenring (224) aufweist, der den genannten Körper (21) axial erweitert.

6. Mühle gemäß einem der vorhergehenden Ansprüche, **gekennzeichnet dadurch, dass** der genannte Stator (1) mit einem auf dem Rand des Behälters aufliegenden Umfangsflansch (11) sowie mit einem in den Hals des Behälters eingeführten Stutzen (12) versehen ist.

7. Mühle gemäß einem der vorhergehenden Ansprüche, **gekennzeichnet dadurch, dass** die genannten Öffnungen (210) ein mindestens teilweise schraubenförmiges Profil aufweisen.

8. Mühle gemäß einem der vorhergehenden Ansprüche, **gekennzeichnet dadurch, dass** der genannte Körper (21) unter Beibehaltung von Rotationsfreiheit auf dem Hals des Behälters einrastet.

9. Mühle gemäß einem der vorhergehenden Ansprüche, **gekennzeichnet dadurch, dass** die genannte Hülse (22) mit Elementen zur seitlichen Blockierung (225) versehen ist, die mit im genannten Körper (21) angeordneten komplementären Elementen (212) zusammenwirken.

10. Mühle gemäß einem der vorhergehenden Ansprüche, **gekennzeichnet dadurch, dass** die genannte Backe ein konisch erweitertes Profil aufweist.

11. Mühle gemäß Anspruch 4, **gekennzeichnet dadurch, dass** das Ende **des kogelstumpfförmlgen Kerns (222)** eine Kugelkalotte (222a) aufweist.

12. Mühle gemäß einem der vorhergehenden Ansprüche, **gekennzeichnet dadurch, dass** die genannte Hülse (22) Elemente zur seitlichen Blockierung trägt, die durch Berührung mit einer zylinderförmigen Wand (212) im Inneren des Körpers (21) zusammenspielen.

13. Mühle gemäß einem der vorhergehenden Ansprüche, **gekennzeichnet dadurch, dass** die genannten Verbindungszapfen (220) lösbar in zackenförmigen Aussparungen (211) gehalten werden.
